# FASCICULE DE BREVET EUROPEEN

(11) **EP 1 614 624 B1**
(45) Date de publication et mention de la délivrance du brevet: **24.01.2007**
(21) Numéro de dépôt: 05106146.3
(22) Date de dépôt: 06.07.2005
(51) Int. Cl.: B64C 1/18

(54) **Plancher pour aéronef**
Flugzeugdeck
Aircraft floor

(30) Priorité: 08.07.2004 FR 0407628
(43) Date de publication de la demande: 11.01.2006
(73) Titulaire: AIRBUS France, 31060 Toulouse (FR)
(72) Inventeur: Vetillard, Alban, 31130 Fonsegrives (FR); Parro, Emmanuel, 31300 Toulouse (FR); Leclerc, Frédéric, 31320 Pechbusque (FR)
(74) Mandataire: Poulin, Gérard

(56) Documents cités:
- GB-A- 531 357
- US-A- 4 674 712

## Description

### DOMAINE TECHNIQUE

La présente invention se rapporte de façon générale à un plancher pour aéronef, et plus particulièrement à un plancher de cockpit incorporant notamment une pluralité de longerons assemblés à une pluralité de traverses.

Néanmoins, la présente invention peut également s'appliquer à tout autre plancher de l'aéronef, tel que le plancher de cabine.

### ÉTAT DE LA TECHNIQUE ANTÉRIEURE

De façon connue, le plancher de cockpit d'un aéronef présente une forme adaptée au rétrécissement du fuselage rencontré dans cette partie de l'aéronef, en ce sens que sa largeur diminue en allant vers l'avant.

De plus, ce type de plancher peut s'étendre vers l'arrière jusque dans une portion cabine de l'aéronef, et constitue plus généralement le plancher de toute la partie nez de l'aéronef.

De tels planchers sont alors conçus pour répondre à plusieurs besoins spécifiques, tels que par exemple la nécessité de présenter des ouvertures pour l'intégration des palonniers de commande et de la console centrale du cockpit, permettre la marche des occupants de l'aéronef, autoriser l'installation d'équipements divers tels que des meubles électriques ou des sièges, assurer la reprise des efforts mécaniques rencontrés en cas de crash de l'aéronef, ou encore isoler électromagnétiquement la portion inférieure de la partie supérieure de cet aéronef.

De l'art antérieur, comme par example du US-A-4674 712, qui montre toutes les caractéristiques du préambule de la revendication indépendente, on connaît des planchers de cockpit intégrant des longerons et traverses métalliques, par exemple réalisés en aluminium ou dans l'un de ses alliages, de façon à offrir une bonne rigidité mécanique. En outre, la rigidité globale d'un tel plancher est renforcée par la présence de caissons obtenus par l'adjonction de tôles métalliques supérieure et/ou inférieure sur une partie de l'ensemble constitué par les longerons et les traverses.

A ce titre, il est noté que les caissons situés aux extrémités latérales du plancher servent également de moyens de fixation de ce plancher sur les cadres et peaux de fuselage du cockpit. D'autre part, les parties de l'ensemble non caissonnées sont recouvertes par un revêtement supérieur du type sandwich nid-d'abeilles, permettant notamment aux occupants de l'aéronef de pouvoir marcher sur le plancher.

Dans ce type de réalisation de l'art antérieur, il a été décelé divers inconvénients majeurs provenant de l'utilisation des caissons pour assurer la fixation du plancher sur le fuselage de l'aéronef.

Tout d'abord, il est noté que les liaisons mécaniques réalisées entre ces traverses et les cadres de fuselage sont du type encastrement, ce qui a pour conséquence d'introduire un moment important autour de la direction longitudinale de l'aéronef dans les traverses du plancher, principalement durant les phases de pressurisation de l'aéronef. L'apparition de ce moment nécessite alors de prévoir une liaison mécanique extrêmement rigide, qui est généralement réalisée à l'aide d'une multitude de rivets ou de vis, et qui est contraignante en termes de temps et de coûts de montage. De plus, cette contrainte très locale d'efforts à reprendre amène également à surdimensionner localement les traverses du plancher. Il peut être, par ailleurs, nécessaire d'effectuer un recalage des traverses pour rattraper les jeux venant des dispersions de production.

En outre, l'assemblage des traverses sur les cadres de fuselage est long et fastidieux à mettre en oeuvre, puisqu'il est nécessaire de prévoir un grand nombre de fixations.

Enfin, il est indiqué que, si un recalage n'est pas effectué, l'assemblage des traverses sur les cadres de fuselage fait apparaître des précontraintes néfastes en termes de fatigue.

Naturellement, ces inconvénients se retrouvent de façon identique ou similaire avec les autres planchers de l'aéronef, tel que le plancher de cabine.

### EXPOSÉ DE L'INVENTION

L'invention a donc pour but de proposer un plancher pour aéronef, ce plancher remédiant au moins partiellement aux inconvénients mentionnés ci-dessus relatifs aux réalisations de l'art antérieur.

Pour ce faire, l'invention a pour objet un plancher pour aéronef, de préférence un plancher de cockpit, ce plancher comportant une pluralité de longerons s'étendant selon une direction longitudinale de l'aéronef ainsi qu'une pluralité de traverses assemblées à ces longerons et s'étendant selon une direction transversale de l'aéronef, le plancher comportant également des moyens de fixation permettant son assemblage sur des cadres de fuselage. Selon l'invention, les moyens de fixation comprennent une pluralité d'articulations chacune raccordée à une extrémité de l'une des traverses, et autorisant une rotation autour de la direction longitudinale de l'aéronef. De plus, chaque articulation comporte un pivot destiné à être fixé à un cadre de fuselage, le pivot étant logé dans un évidement pratiqué dans un élément de raccordement appartenant également à cette articulation, cet élément de raccordement étant raccordé solidairement à une extrémité de l'une des traverses.

Avantageusement, la présence d'une telle articulation entre une traverse et un cadre de fuselage associé permet de bénéficier d'un véritable degré de liberté entre ces deux éléments, ce qui a pour conséquence de supprimer entièrement le moment selon la direction longitudinale rencontré dans les réalisations de l'art antérieur.

De ce fait, le dimensionnement des traverses peut être réduit, et le montage de l'articulation sur son cadre de fuselage correspondant peut être effectué relativement rapidement. En effet, la contrainte de reprise d'efforts liés au moment selon la direction longitudinale de l'aéronef n'existant plus, le nombre de fixations nécessaire à l'assemblage de l'articulation sur le cadre est par conséquent considérablement diminué par rapport à celui requis pour assembler par encastrement les caissons de l'art antérieur.

Enfin, l'assemblage des articulations sur les cadres de fuselage procure l'avantage de diminuer fortement les précontraintes introduites dans l'ensemble lors du montage, et permet donc une meilleure résistance à la fatigue.

De manière préférentielle, le pivot dispose d'une pluralité de trous traversants orientés selon la direction longitudinale de l'aéronef, permettant l'assemblage de ce pivot sur son cadre de fuselage associé, de préférence à l'aide de rivets.

Préférentiellement, le pivot présente une collerette de butée permettant de s'opposer au déplacement de l'élément de raccordement dans la direction longitudinale de l'aéronef.

Toujours de façon préférentielle, le plancher est tel qu'une articulation est prévue à chacune des deux extrémités de chacune des traverses de ce plancher.

On peut prévoir que les longerons et les traverses, formant conjointement une structure primaire de plancher, sont tous réalisés en matériau composite. Cela permet avantageusement d'obtenir une réduction significative de la masse globale de ce plancher. A titre indicatif, la réduction de masse observée peut aller au-delà de 20% par rapport aux solutions classiques de l'art antérieur utilisant des matériaux métalliques.

Par ailleurs, les traverses et les longerons en matériau composite ne sont avantageusement plus soumis aux risques de corrosion rencontrés antérieurement.

Enfin, il est noté que le type de matériau utilisé dans le plancher selon l'invention est compatible avec l'ensemble des besoins spécifiques mentionnés ci-dessus, notamment en ce qui concerne la reprise des efforts mécaniques en cas de crash de l'aéronef.

De préférence, les longerons et les traverses sont réalisés dans un matériau composite à base de fibres de carbone imprégnées de résine. Cette résine est de préférence une résine thermoplastique, telle que de la résine PEEK, PEKK, PPS, etc.

Bien que la résine PEEK soit préférée en raison des hautes performances mécaniques qu'elle est capable de procurer, d'autres types de résine thermoplastique pourraient être utilisés, tels que de la résine dite PPS mentionnée ci-dessus et obtenue par polymérisation du sulfure de phénylène. En outre, il pourrait également être utilisé des résines thermodurcissables.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement éclatée en perspective d'une partie nez d'un aéronef, ce dernier comprenant un plancher de cockpit selon un mode de réalisation préféré de la présente invention ;
- la figure 2 représente une vue en perspective de la structure primaire du plancher de cockpit représenté sur la figure 1 ;
- la figure 3 représente une vue partielle et agrandie en perspective de la figure 2, montrant plus particulièrement l'assemblage entre les sections de longeron et les traverses ;
- la figure 4 représente une vue partielle en perspective du plancher de cockpit montré sur la figure 1, ledit plancher étant représenté sans sa peau ;
- la figure 5 représente une vue en perspective du plancher de cockpit montré sur la figure 1, correspondant au plancher représenté sur la figure 4 auquel il a été assemblé une peau supérieure ainsi que des moyens de fixation permettant son assemblage sur les cadres de fuselage du cockpit ;
- la figure 6 représente une vue en perspective partiellement éclatée montrant plus spécifiquement une articulation appartenant aux moyens de fixation montrés sur la figure 5 ; et
- la figure 7 représente une vue en coupe prise selon le plan P de la figure 6.

### EXPOSÉ DÉTAILLÉ D'UN MODE DE RÉALISATION PRÉFÉRÉ

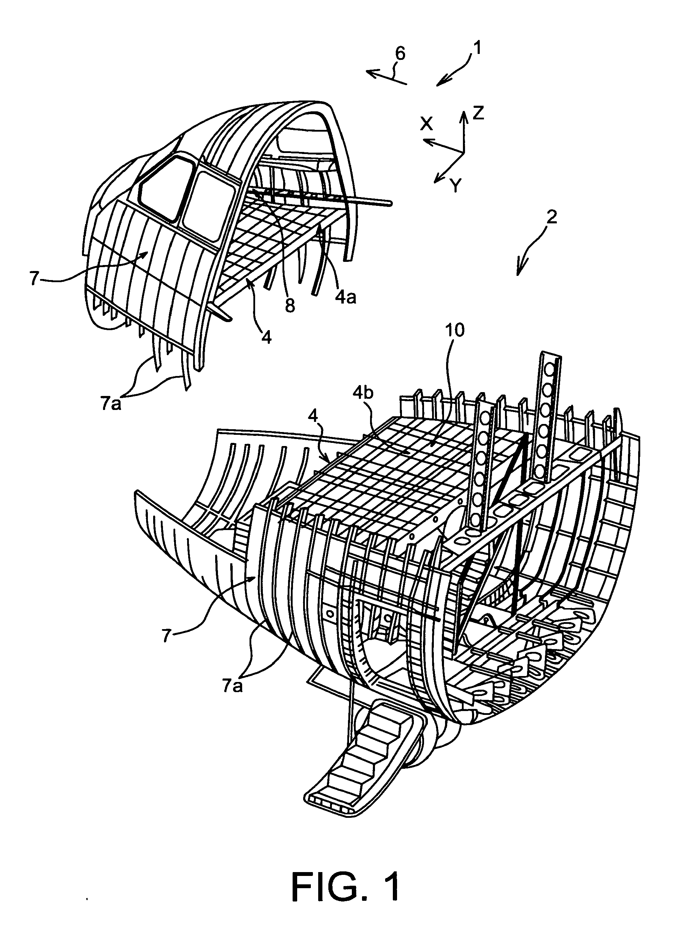

En référence à la figure 1, il est partiellement représenté l'avant d'un aéronef 1, et plus précisément la partie nez 2 de cet aéronef, comprenant un plancher de cockpit 4 selon un mode de réalisation préféré de la présente invention.

Dans toute la description qui va suivre, par convention, on appelle X la direction longitudinale de l'aéronef 1, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs de l'aéronef, cette direction étant représentée schématiquement par la flèche 6.

Comme on peut le voir sur la figure 1, le plancher de cockpit 4 s'étend dans un plan XY sur sensiblement toute la longueur de la partie nez 2 de l'aéronef, et est monté sur un fuselage 7 de celui-ci. Comme cela sera explicité de façon détaillée ultérieurement, le plancher de cockpit 4 est monté sur des cadres de fuselage 7a du fuselage 7, ces cadres 7a étant espacés les uns des autres dans la direction X de l'aéronef, et répartis de part et d'autre du plancher 4 dans la direction Y.

De plus, le plancher 4 dispose d'une forme se rétrécissant dans la direction Y en allant vers l'avant, en raison du rétrécissement du fuselage 7 dans cette même direction.

D'autre part, la partie nez 2 peut comprendre un espace avant de poste de commande 8 ainsi qu'un espace arrière de cabine 10, ces deux espaces 8, 10 étant habituellement séparés par une cloison (non représentée). De façon plus générale, la partie nez d'un aéronef et le plancher cockpit s'étendent sur environ 10 % de la longueur totale de cet aéronef selon la direction X, c'est-à-dire sur quelques mètres, et par exemple sur trois à cinq mètres. A titre d'exemple illustratif, lorsque l'aéronef est essentiellement destiné à transporter du fret et/ou des équipements militaires, sa partie nez est délimitée vers l'arrière par une zone destinée au stockage des éléments qui viennent d'être mentionnés.

Comme cela est représenté, le plancher de cockpit 4 peut éventuellement être conçu en deux parties distinctes destinées à être assemblées mécaniquement, la séparation entre une partie avant 4a et une partie arrière 4b de plancher se situant par exemple au niveau de la cloison séparant l'espace avant de poste de commande 8 et l'espace arrière de cabine 10. Néanmoins, pour faciliter la compréhension de l'invention, il sera considéré dans la suite de la description que le plancher de cockpit 4 forme un élément unique s'étendant sensiblement d'un bout à l'autre de la partie nez 2 de l'aéronef.

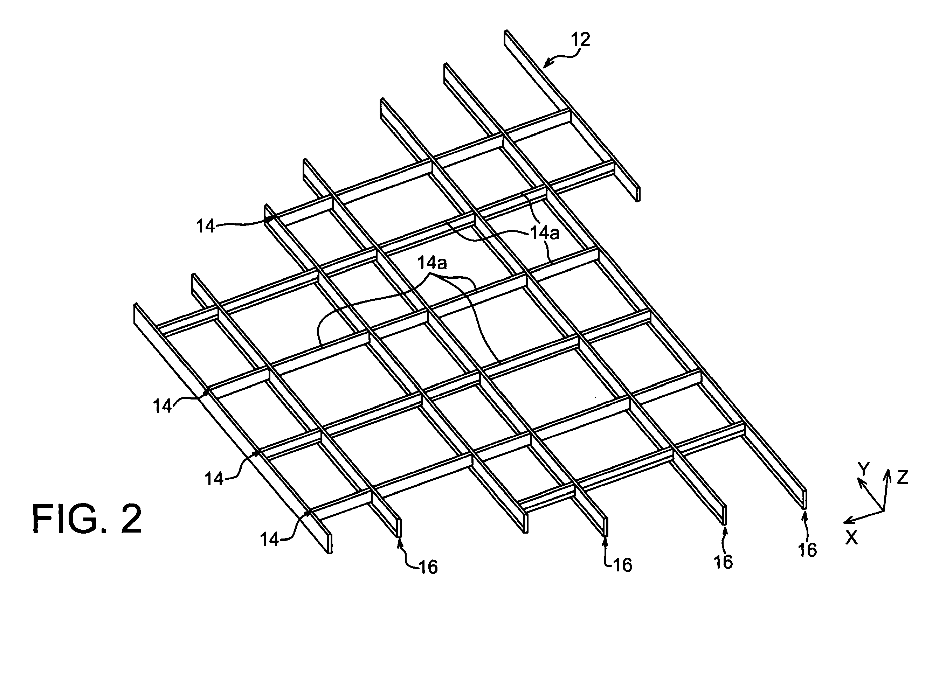

En référence à présent à la figure 2, on voit une structure primaire ou principale 12 du plancher 4 montré sur la figure 1, cette structure primaire 12 étant formée par un assemblage entre une pluralité de longerons 14 s'étendant selon la direction X, et une pluralité de traverses 16 s'étendant selon la direction Y de l'aéronef. Il est précisé que cette structure primaire 12 assure une partie importante de la rigidité globale du plancher de cockpit 4.

Les longerons 14, par exemple prévus au nombre de six, sont chacun réalisés dans un matériau composite, de préférence dans un matériau composite thermoplastique obtenu à l'aide de plis de fibres de carbone imprégnés de résine PEEK, PEKK ou PPS.

Chaque longeron 14 présente alors préférentiellement une section transversale en forme de C similaire à une forme de U incliné à 90°, qui est particulièrement facile à obtenir à l'aide d'une presse d'estampage, cette dernière permettant également de disposer facilement d'un C dont les branches supérieure et inférieure ainsi que la base du C présentent sensiblement la même épaisseur, par exemple comprise entre 2 et 5 mm.

De manière analogue, les traverses 16, par exemple prévues au nombre de sept, sont également chacune réalisées dans un matériau composite, de préférence dans un matériau composite thermoplastique obtenu à l'aide de plis de fibres de carbone imprégnés de résine PEEK, PEKK ou PPS.

Chaque traverse 16 présente alors aussi préférentiellement une section transversale en forme de C similaire à une forme de U incliné à 90°, et dont les branches supérieure et inférieure ainsi que la base du C présentent sensiblement la même épaisseur, par exemple comprise entre 2 et 5 mm.

De préférence, chaque traverse 16 est réalisée d'une seule pièce et s'étend dans la direction Y sur toute la largeur de la structure primaire 12. En revanche, chaque longeron 14 est en fait composé de plusieurs sections de longeron 14a et s'étend dans la direction X sur toute la longueur de la structure primaire 12.

Plus précisément, chaque section de longeron 14a d'un longeron 14 donné est positionnée entre deux traverses 16 directement consécutives dans la direction X, et dispose de deux extrémités assemblées rigidement respectivement à ces deux mêmes traverses 16 directement consécutives.

A cet égard, il est noté que l'avantage d'une telle configuration réside dans le fait que les branches ou semelles supérieures des sections de longeron 14a et des traverses 16 sont agencées dans un même plan XY, ces branches supérieures de C permettant par conséquent de former conjointement une surface supérieure plane de la structure primaire 12.

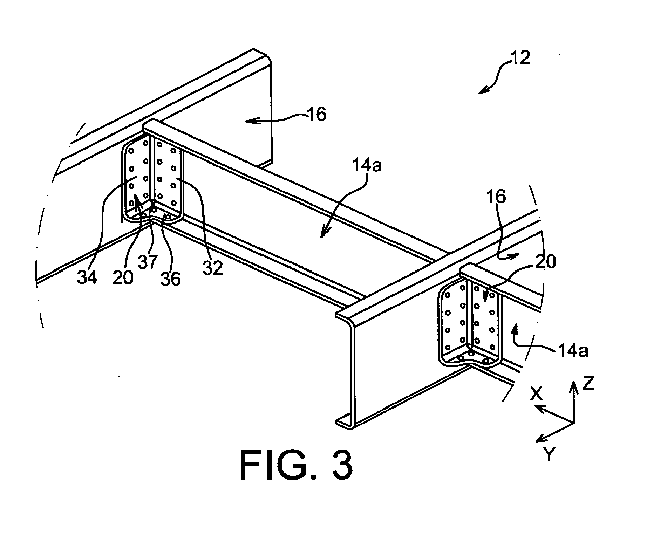

La figure 3 montre à titre indicatif que les sections de longeron 14a sont assemblées aux traverses 16 par l'intermédiaire d'éléments de jonction 20, qui sont également chacun réalisés dans un matériau composite, de préférence dans un matériau composite thermoplastique obtenu à l'aide de plis de fibres de carbone imprégnés de résine PEEK, PEKK ou PPS.

Globalement, chaque élément de jonction 20 est constitué de trois faces planes qui forment ensemble un coin de malle. En d'autres termes, un élément 20 comprend une première face plane 32 qui est orientée selon un plan XZ, une seconde face plane 34 qui est orientée selon un plan YZ, ainsi qu'une troisième face plane 36 qui est orientée selon un plan XY, chacune de ces trois faces disposant de deux arêtes de jonction (non référencées) assurant respectivement la jonction avec les deux autres faces. De plus, les trois faces 32, 34, 36 disposent de préférence d'une même épaisseur, et se rejoignent toutes en une zone sensiblement arrondie 37.

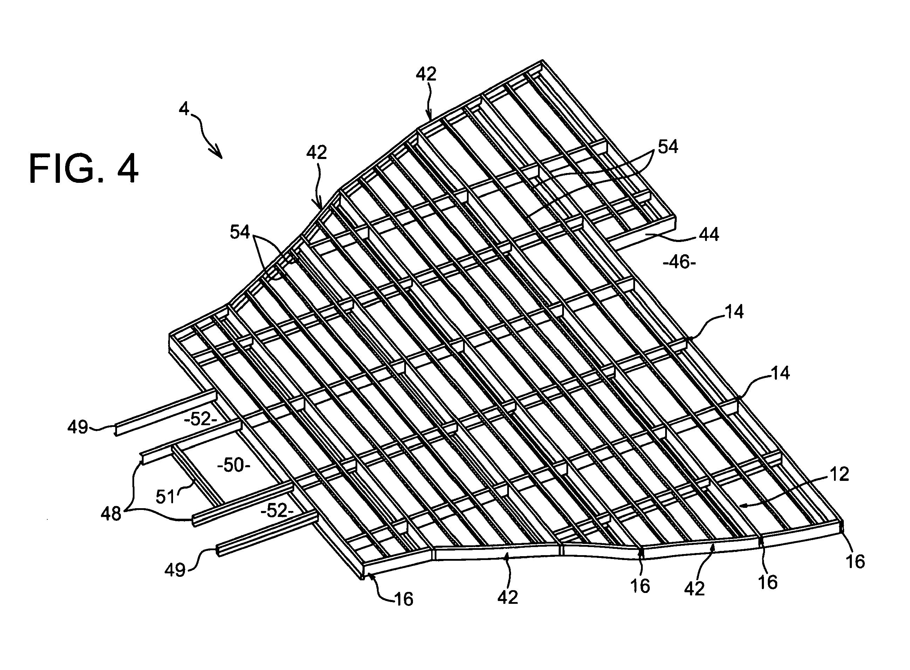

En référence à présent à la figure 4, on voit une partie du plancher de cockpit 4, ce plancher 4 comprenant la structure primaire 12 sur laquelle ont été assemblés des longerons périphériques 42, ces derniers étant identiques ou similaires aux sections de longeron 14a de la structure primaire 12. Comme on peut clairement l'apercevoir sur la figure 4, les longerons périphériques 42 permettent de relier entre elles et deux à deux les extrémités des traverses 16 de la structure primaire 12.

A titre d'exemple illustratif, il est noté que le plancher 4 est également équipé d'un petit longeron 44 situé à l'arrière de la structure primaire 12, et définissant avec une traverse arrière 16 un décrochement 46 dans la structure 12, ce décrochement 46 étant adapté pour loger un escalier (non représenté) dont une marche supérieure serait située à proximité du petit longeron 44.

D'autre part, des longerons secondaires avant 48, 49 de préférence prévus au nombre de quatre et réalisés dans un matériau composite thermoplastique obtenu à l'aide de résine PEEK, PEKK ou PPS et de plis de fibres de carbone, sont solidarisés à la traverse 16 la plus avant de la structure primaire 12.

Les deux longerons secondaires 48 situés les plus au centre délimitent conjointement un espace 50 pour recevoir une console centrale du cockpit (non représentée), et peuvent être chacun situés dans le prolongement d'un longeron 14 de la structure 12. De plus, ils peuvent être reliés l'un à l'autre à l'avant par l'intermédiaire d'une petite traverse 51 pouvant également supporter la console centrale.

D'autre part, les deux longerons secondaires 49 situés latéralement délimitent chacun avec l'un des deux longerons secondaires 48 un espace 52 pour recevoir des palonniers de commande (non représentés), de sorte que les deux espaces 52 obtenus se situent de part et d'autre de l'espace 50 dans la direction transversale Y de l'aéronef.

Le plancher de cockpit 4 présente en outre des éléments raidisseurs 54, qui s'étendent de préférence selon la direction Y, entre les traverses 16 de la structure primaire 12. A titre indicatif, les éléments raidisseurs 54 sont réalisés dans un matériau composite, de préférence dans un matériau composite thermoplastique obtenu à l'aide de résine PEEK, PEKK ou PPS et de plis de fibres de carbone, et sont par exemple prévus dans un nombre compris entre deux et cinq, entre deux traverses 16 directement consécutives dans la direction X.

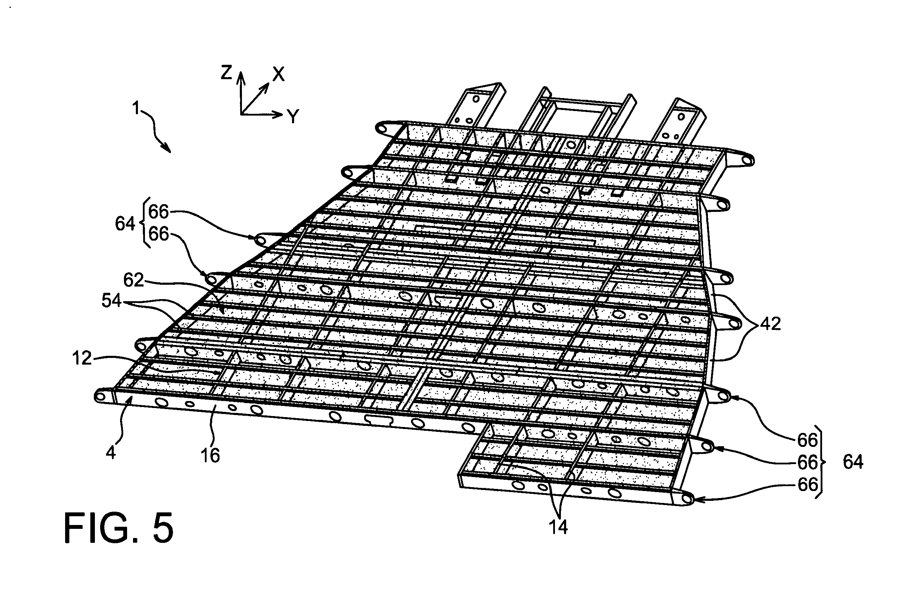

Les parties supérieures des éléments raidisseurs 54 définissent conjointement une surface supérieure qui est confondue avec la surface supérieure de la structure primaire 12, sur laquelle va reposer une peau 62 telle que celle représentée sur la figure 5.

Cette peau 62 est assemblée rigidement sur les longerons 14, les traverses 16, ainsi que sur les éléments raidisseurs 54. A cet égard, il est précisé que ces éléments 54 sont de préférence assemblés sur une surface inférieure de la peau 62, par exemple par rivetage, avant que la surface inférieure de cette peau 62 ne soit assemblée sur les branches supérieures des longerons 14 et des traverses 16.

Ici encore, la peau 62 est préférentiellement réalisée dans un matériau composite selon une épaisseur sensiblement constante, et de préférence dans un matériau composite thermoplastique obtenu à l'aide de résine PEEK, PEKK ou PPS et de plis de fibres de carbone.

Sur la figure 5, la structure primaire 12 n'étant pas recouverte par une peau inférieure, il est donc à considérer que la peau supérieure 62 forme uniquement des demi-caissons avec les longerons 14 et les traverses 16.

Toujours en référence à cette figure 5, on peut voir que le plancher 4 est équipé de moyens de fixation 64 permettant son assemblage sur les cadres de fuselage 7a indiqués précédemment.

Globalement, les moyens de fixation 64 sont composés d'une pluralité d'articulations 66, chacune de ces articulations 66 étant montée à une extrémité de l'une des traverses 16, de façon à pouvoir être fixée à un cadre de fuselage 7a situé à proximité. Plus précisément, chaque traverse 16 du plancher 4 porte deux articulations 66 respectivement agencées à ses deux extrémités. Néanmoins, il est précisé que dans le mode de réalisation préféré représenté, la traverse 16 la plus arrière constitue une exception, puisqu'elle ne dispose que d'une unique articulation 66 en raison de sa dimension réduite dans la direction Y. En effet, seule l'une des deux extrémités est destinée à se situer en regard et à proximité d'un cadre 7a du fuselage 7, l'autre extrémité participant quant à elle à délimiter le décrochement 46.

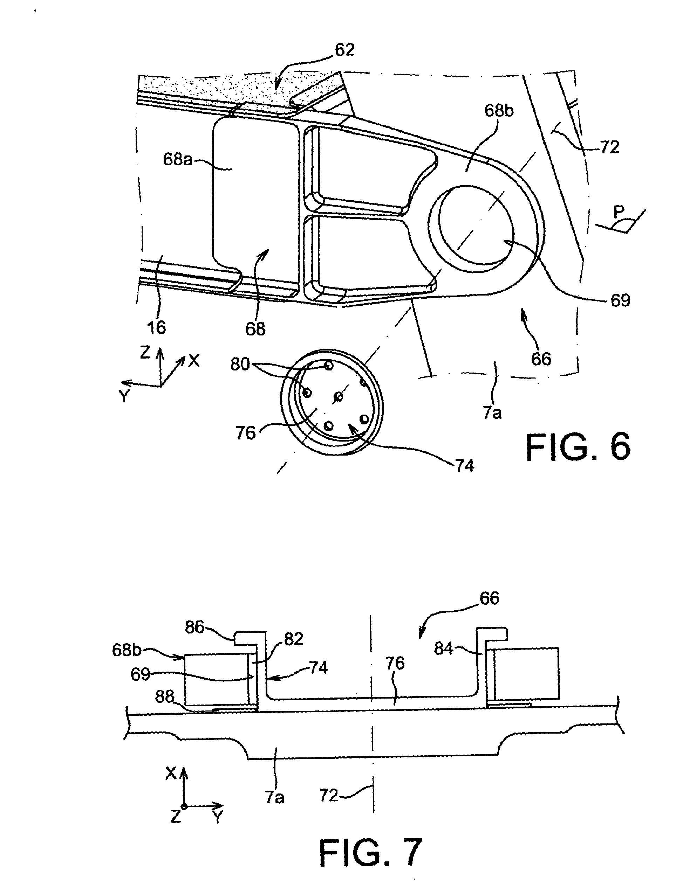

La figure 6 montre une articulation quelconque 66 appartenant aux moyens de fixation 64 représentés sur la figure 5, lorsque cette articulation 66 est montée sur son cadre de fuselage associé 7a.

L'articulation 66 présente un élément de raccordement 68 raccordé solidairement à l'extrémité de la traverse 16, de préférence par rivetage ou par soudage. Cet élément de raccordement 68, qui peut être métallique et qui se trouve globalement agencée dans un plan YZ, comporte une première extrémité 68a solidaire de la traverse 16, ainsi qu'une seconde extrémité 68b (ou chape) opposée à la première extrémité 68a, par rapport à la direction Y. Cette seconde extrémité 68b fait donc saillie de la traverse 16 dans la direction Y, et comporte un évidement (ou orifice) circulaire 69 d'axe 72 parallèle à la direction X, qui est de préférence traversant.

Dans une forme alternative de réalisation, l'élément de raccordement 68 peut être intégré directement à la traverse 16 lors de la fabrication de celle-ci. Dans ce cas, il est réalisé dans le même matériau que celui de la traverse 16, à savoir métallique ou en matériau composite.

L'articulation 66 comporte un second élément 74 s'ajoutant à l'élément de raccordement 68, ce second élément 74, dit pivot, présentant un même axe 72 que celui de l'évidement circulaire 69. Ce second élément 74 est alors conformé pour venir s'emboîter et se loger dans l'évidement 69, comme le montre schématiquement la vue éclatée de la figure 6. Ce pivot 74 présente une portion centrale 76 orientée selon un plan YZ, et étant en contact plan avec une paroi latérale du cadre de fuselage 7a.

La portion centrale 76 est pourvue de trous traversants 80 orientés selon la direction X, ces trous 80 étant conçus de manière à accueillir des rivets (non représentés) assurant la fixation du pivot 74 sur le cadre 7a, et plus spécifiquement sur la paroi latérale de ce dernier qui est également orientée selon un plan YZ. On garantit ainsi, par l'utilisation d'une pluralité de rivets, que la rotation ne pourra se faire qu'entre le pivot 74 et la seconde extrémité 68b de l'élément de raccordement 68.

Il est noté qu'une alternative possible consiste à prévoir que ces trous traversants 80 sont remplacés par des avant-trous permettant de faciliter le positionnement des rivets assurant la fixation du pivot 74 sur le cadre 7a.

Il va à présent être fait référence à la figure 7 correspondant à une vue en coupe prise selon un plan P de la figure 6, ce plan P étant un plan XY traversant diamétralement le second élément 74 et la seconde extrémité 68b de l'élément 68.

Tout d'abord, on peut apercevoir que l'évidement 69 de la seconde extrémité 68b et le pivot 74 procurent un réel degré de liberté entre la traverse 16 et le cadre 7a, car ces deux éléments 68b, 74 sont susceptibles de pivoter librement l'un par rapport à l'autre autour de l'axe 72 parallèle à la direction longitudinale X.

Pour faciliter ce pivotement et diminuer les risques d'écrouissage, une bague intermédiaire 82 peut être interposée entre les bords de l'évidement 69 et le second élément 74 du type pivot, et montée de façon solidaire sur l'élément de raccordement 68, par exemple par montage à froid ou par collage. On préférera utiliser une bague 82 en cuivre-béryllium ou en bronze, si l'élément de raccordement 68 est métallique, par exemple en aluminium. En revanche, dans le cas où l'élément de raccordement 68 est en matériau composite, la bague 82 sera de préférence réalisée en titane ou en acier inoxydable.

Avec une telle configuration, les pièces en contact qui peuvent pivoter l'une par rapport à l'autre sont alors la bague intermédiaire 82 et une partie de roulement 84 du pivot 74. A cet égard, il est noté que cette partie de roulement 84 prend de préférence la forme d'un tube solidarisé à l'une de ses extrémités à la portion centrale 76, comme cela est représenté sur la figure 7.

Sur cette même figure, on peut voir qu'une collerette de butée 86 est située au niveau de l'autre extrémité de la partie de roulement 84, cette collerette 86 sensiblement orientée dans un plan YZ ayant pour fonction de constituer une butée pour la seconde extrémité 68b dans la direction X. Toujours dans cette même direction X mais dans l'autre sens, la seconde extrémité 68b rencontre une autre butée constituée par une cale d'usure 88 qui est de préférence montée de façon collée sur la paroi latérale du cadre de fuselage 7a, cette cale 88 prenant donc préférentiellement une forme annulaire.

Enfin, il est précisé que la seconde extrémité 68b est montée avec un certain jeu entre la collerette de butée 86 et la cale d'usure 88, dans le but évident d'assurer une libre rotation de l'articulation 66 et de rattraper les jeux entre les traverses 16 et les cadres de fuselage 7a sans introduire de recalage ou de précontrainte. A ce titre, il est précisé que les articulations 66 des moyens de fixation 64 sont notamment sollicitées lors d'un passage du cockpit d'un état pressurisé à un état normal, et inversement, dans la mesure où la pressurisation du cockpit entraîne généralement un fléchissement du plancher 4 vers le bas.

Ces articulations 66 sont donc capables d'assurer la reprise de efforts s'exerçant selon les directions Y et Z et transitant entre la structure rigide 12 et les cadres de fuselage 7a du cockpit, la reprise des efforts s'exerçant selon la direction X étant obtenue à l'aide de moyens annexes non présentés dans cette demande.

Bien entendu, diverses modifications peuvent être apportées par l'homme du métier au plancher 4 qui vient d'être décrit, uniquement à titre d'exemple non limitatif. En particulier, si la description détaillée ci-dessus est faite en référence à un plancher de cockpit, il est naturellement à comprendre que l'invention s'applique à tout autre plancher de l'aéronef, tel que le plancher de cabine, sans sortir du cadre de l'invention.

## Revendications

1. Plancher (4) pour aéronef, ledit plancher comportant une pluralité de longerons (14) s'étendant selon une direction longitudinale (X) de l'aéronef ainsi qu'une pluralité de traverses (16) assemblées auxdits longerons (14) et s'étendant selon une direction transversale (Y) de l'aéronef, ledit plancher (4) comportant également des moyens de fixation (64) permettant son assemblage sur des cadres de fuselage (7a), lesdits moyens de fixation (64) comprenant une pluralité d'articulations (66) chacune raccordée à une extrémité de l'une desdites traverses (16), et autorisant une rotation autour de la direction longitudinale (X), **caractérisé en ce que** chaque articulation (66) comporte un pivot (74) destiné à être fixé à un cadre de fuselage (7a), ledit pivot (74) étant logé dans un évidement (69) pratiqué dans un élément de raccordement (68) appartenant également à ladite articulation (66), ledit élément de raccordement (68) étant raccordé solidairement à une extrémité de l'une desdites traverses (16).

2. Plancher (4) selon la revendication 1, **caractérisé en ce que** le pivot (74) dispose d'une pluralité de trous traversants (80) orientés selon la direction longitudinale (X), permettant l'assemblage de ce pivot (74) sur son cadre de fuselage associé (7a).

3. Plancher (4) selon l'une quelconque des revendications 1 ou 2, **caractérisé en ce que** ledit pivot (74) présente une collerette de butée (86) permettant de s'opposer au déplacement de l'élément de raccordement (68) dans la direction longitudinale (X).

4. Plancher (4) selon l'une quelconque des revendications précédentes, **caractérisé en ce qu'**une articulation (66) est prévue à chacune des deux extrémités de chacune desdites traverses (16).

5. Plancher (4) selon l'une quelconque des revendications précédentes, **caractérisé en ce que** lesdits longerons (14) et lesdites traverses (16) sont réalisées en matériau composite.

6. Plancher (4) selon la revendication 5, **caractérisé en ce que** lesdits longerons (14) et lesdites traverses (16) sont réalisés dans un matériau composite thermoplastique.

7. Plancher (4) selon la revendication 6, **caractérisé en ce que** le matériau composite thermoplastique est réalisé à l'aide de plis de fibres de carbone imprégnés de résine PEEK, PEKK ou PPS.

8. Plancher (4) selon l'une quelconque des revendications précédentes, **caractérisé en ce qu'**il s'agit d'un plancher de cockpit pour aéronef.

## Claims

1. Aircraft floor (4), said floor comprising a plurality of spars (14) running along a longitudinal direction (X) of the aircraft and a plurality of cross-beams (16) assembled to said spars (14) and running along a transverse direction (Y) of the aircraft, said floor (4) also comprising attachment means (64) used to assemble it to fuselage frames (7a), said attachment means (64) comprising a plurality of articulations (66) each connected to one end of one of said cross-beams (16), and enabling rotation about the longitudinal direction (X), **characterized in that** each articulation (66) comprises a pivot (74) intended to be fixed to a fuselage frame (7a), said pivot (74) being housed in a recess (69) formed in a connection element (68) also forming part of said articulation (66), said connecting element (68) being fixed to one end of one of said cross-beams (16).

2. Floor (4) according to claim 1, **characterized in that** the pivot (74) is provided with a plurality of through holes (80) oriented along the longitudinal direction (X), enabling assembly of this pivot (74) on its associated fuselage frame (7a).

3. Floor (4) according to either of claims 1 or 2, **characterized in that** said pivot (74) is provided with a stop collar (86) opposing displacement of the connection element (68) along the longitudinal direction (X).

4. Floor (4) according to any one of the previous claims, **characterized in that** there is an articulation (66) at each of the two ends of said cross-beams (16).

5. Floor (4) according to any one of the previous claims, **characterized in that** said spars (14) and said cross-beams (16) are made from a composite material.

6. Floor (4) according to claim 5, **characterized in that** said spars (14) and said cross-beams (16) are made from a thermoplastic composite material.

7. Floor (4) according to claim 6, **characterized in that** thermoplastic composite material is made using carbon fibre plies impregnated with PEEK, PEKK or PPS resin.

8. Floor (4) according to any one of the previous claims, **characterized in that** it is an aircraft cockpit floor.

## Patentansprüche

1. Deck (4) für ein Luftfahrzeug, wobei das Deck mehrere Längsträger (14) umfasst, die sich in einer Longitudinalrichtung (X) des Luftfahrzeugs erstrecken, sowie mehrere Querträger (16), die mit den Längsträgern (14) zusammengebaut sind und sich in einer Querrichtung (Y) des Luftfahrzeugs erstrecken, wobei das Deck (4) auch Befestigungsmittel (64) aufweist, die dessen Anbringung an Rumpfrahmen (7a) ermöglichen, wobei die Befestigungsmittel (64) mehrere Gelenkteile (66) umfassen, von denen jedes mit einem Ende eines der Querträger (16) verbunden ist und eine Drehung um die Longitudinalrichtung (X) gestattet,
**dadurch gekennzeichnet, dass** jedes Gelenkteil (66) ein Drehgelenk (74) umfasst, das an einem Rumpfrahmen (7a) zu befestigen ist, wobei das Drehgelenk (74) in einer Ausnehmung (69) untergebracht ist, die in ein Verbindungselement (68) eingebracht ist, das ebenfalls zu dem Gelenkteil (66) gehört, wobei das Verbindungselement (68) fest mit einem Ende eines der Querträger (16) verbunden ist.

2. Deck (4) nach Anspruch 1, **dadurch gekennzeichnet, dass** das Drehgelenk (74) über mehrere Durchgangslöcher (80) verfügt, die in einer Longitudinalrichtung (X) ausgerichtet sind und die die Montage dieses Drehgelenks (74) an dem ihm zugeordneten Rumpfrahmen (7a) ermöglichen.

3. Deck (4) nach einem der Ansprüche 1 oder 2, **dadurch gekennzeichnet, dass** das Drehgelenk (74) einen Anschlagkragen (86) aufweist, der sich der Bewegung des Verbindungselements (68) in der Longitudinalrichtung (X) widersetzen kann.

4. Deck (4) nach einem der vorangehenden Ansprüche, **dadurch gekennzeichnet, dass** ein Gelenkteil (66) an jedem der beiden Enden jedes der Querträger (16) vorgesehen ist.

5. Deck (4) nach einem der vorhergehenden Ansprüche, **dadurch gekennzeichnet, dass** die Längsträger (14) und die Querträger (16) aus Verbundmaterial hergestellt sind.

6. Deck (4) nach Anspruch 5, **dadurch gekennzeichnet, dass** die Längsträger (14) und die Querträger (16) aus einem thermoplastischen Verbundmaterial hergestellt sind.

7. Deck (4) nach Anspruch 6, **dadurch gekennzeichnet, dass** das thermoplastische Verbundmaterial mit Hilfe von Kohlenstofffaser-Fältelungen, die mit PEEK-, PEKK- oder PPS-Harz getränkt sind, hergestellt ist.

8. Deck (4) nach einem der vorangehenden Ansprüche, **dadurch gekennzeichnet, dass** es sich um ein Cockpit-Deck für ein Luftfahrzeug handelt.
